# EUROPEAN PATENT SPECIFICATION

(11) **EP 2 911 435 B1**
(45) Date of publication and mention of the grant of the patent: **12.02.2020**
(21) Application number: 14305250.4
(22) Date of filing: 24.02.2014
(51) Int. Cl.: H04W 16/28, H04B 7/06, H04B 7/08, H04W 4/029, G01S 5/02, H04W 64/00

(54) **APPARATUSES, METHODS AND COMPUTER PROGRAMS FOR DETERMINING INFORMATION RELATED TO A PATH DIRECTION AND FOR A TRANSCEIVER OF A COMMUNICATION DEVICE**
VORRICHTUNGEN, VERFAHREN UND COMPUTERPROGRAMME ZUR BESTIMMUNG VON INFORMATIONEN IN BEZUG AUF EINE PFADRICHTUNG UND FÜR EINEN SENDEREMPFÄNGER EINER KOMMUNIKATIONSVORRICHTUNG
APPAREILS, PROCÉDÉS ET PROGRAMMES INFORMATIQUES PERMETTANT DE DÉTERMINER DES INFORMATIONS RELATIVES À UN TRAJET DIRECTION ET D'UN ÉMETTEUR-RÉCEPTEUR D'UN DISPOSITIF DE COMMUNICATION

(43) Date of publication of application: 26.08.2015
(73) Proprietor: Alcatel Lucent, 91620 Nozay (FR)
(72) Inventor: Halbauer, Hardy, 70435 Stuttgart (DE); Boccardi, Federico, 20059 Vimercate, MI (IT); Baracca, Paolo, 70435 Stuttgart (DE); Hoydis, Jakob R., 70435 Stuttgart (DE)
(74) Representative: Novagraaf Technologies

(56) References cited:
- EP-A1- 1 865 700
- EP-A1- 2 405 687
- EP-A2- 2 988 559
- WO-A1-2012/120444
- WO-A1-2013/089731
- US-A1- 2011 287 778
- US-A1- 2012 008 526
- US-A1- 2012 119 953
- US-B1- 7 996 034

## Description

### Technical Field

Embodiments relate to apparatuses, methods and computer programs for determining information related to a path direction and for a transceiver of a communication device, more particularly but not exclusively, to radio frequency transmission in a millimeter-wavelength range.

### Background

This section introduces aspects that may be helpful in facilitating a better understanding of the invention(s). Accordingly, the statements of this section are to be read in this light and are not to be understood as admissions about what is in the prior art or what is not in the prior art.

Communication in higher frequency ranges than used by today's classical wireless systems, like 11-300GHz with so-called mm-Waves, may face the challenge to exploit Line-Of-Sight (LOS), Non LOS (NLOS), or reflected paths for e.g. small cell backhaul or access applications which may use high gain antennas with steerable beams to overcome the high pathloss. Due to the specific mm-wave propagation properties the channel may often consist only of one or two spatially separated paths, and a connection between a transmitter and a receiver may only be established when pointing a main lobe of an antenna pattern or beam of a high gain and narrow Half Power Beam Width (HPBW), for example using an antenna array, into the direction of the signal. However, the direction of the strongest path might not be known and a beam might not be steered initially into the right direction. At establishment of a mm-wave connection it may be considered difficult to derive the appropriate weights for the beam pattern from the highly attenuated signal to realize high gain pattern. The situation may be considered different from the situation at lower (e.g. 2.6 GHz) frequencies, where lower gains and less antenna elements would allow estimation of the beam pattern already from estimates of individual antenna elements.

WO 2012/120444 (A1) teaches a multi-antenna transmission process for providing down-link radio coverage from radio base station to mobile terminal in a network for radio mobile communications through a transmission system. The system comprising: at least one multi-radiator transmitting antenna, directed towards at least one mobile terminal; at least one database containing information about a position of said mobile terminal; and processing means cooperating with said at least one multi-radiator transmitting antenna and said at least one database. In case the position of the radio mobile terminal is known, a radio base station equipped with a "vectorial" antenna can direct the transmission beam in the most appropriate direction to allow the radio mobile terminal in that position to receive at best the transmission directed thereto.

US 7996034 (B1) discloses a cellular telephone handset utilized an electrically-steered directional antenna to increase the received signal strength when the handset is in a poor signal environment. As a result, the handset reduces the need for an end user to tilt and twirl their head to try and find the direction of the strongest signal strength.

EP 2 988 559 A2 discloses a method for establishing a millimeter wave wireless communication link and a terminal device. The terminal device performs signaling interaction with a mediation device to obtain the relative location information, to assist in completing beamforming by using a media access control protocol in which omnibearing communication and directional communication are combined.

US 2012/008526 A1 discloses methods, systems and computer-readable media for forming and tracking a location-sharing group. The location-sharing group can be performed ad hoc without the assistance of a central server. A geofence can be defined that encloses the current locations of the participating devices in the location-sharing group. The geographic location of the location-sharing group as a whole can be tracked and provided to the participating devices in the location-sharing group. Group-level location-sharing can be enabled. Departure of a participating device from the location-sharing group can be detected based on the current location and the coverage radius of each device in the location-sharing group. Entry of points of interest into the geofence of the location-sharing group can be detected and notified to the participating devices in the location-sharing group.

EP 1 865 700 A1 discloses a data communication apparatus capable of creating a new type of communication. Motion information obtaining means 33 obtains information on the motion of an arbitrary apparatus. An other-party apparatus motion determination section 21 makes a determination as to the motion of the arbitrary apparatus on the basis of the information on the motion of the arbitrary apparatus, the information being obtained by the motion information obtaining means 33. A communication determination section 22 determines whether or not communication is to be performed with an arbitrary apparatus on the basis of the motion determination output by the other-party apparatus motion determination section 21. When it is determined by the communication determination section 22 that communication is to be performed, predetermined data communication is started with the arbitrary apparatus.

### Summary of illustrative Embodiments

Some simplifications may be made in the following summary, which is intended to highlight and introduce some aspects of the various exemplary embodiments, but such simplifications are not intended to limit the scope of the inventions. Detailed descriptions of a preferred exemplary embodiment adequate to allow those of ordinary skill in the art to make and use the inventive concepts will follow in later sections.

Various embodiments provide apparatuses, methods and computer programs for a processing apparatus for determining information related to a path direction and for a transceiver of a communication device. Embodiments may provide an efficient concept for locating initial beam directions for transmission and/or reception of one or more direct or reflected paths. Once a basic direction is found, tracking and optimization algorithms for beamforming, which then may operate with signals with sufficiently high SNR, may be applied. Hence, embodiments may enable or establish a fast method for finding an initial beam direction for reception or transmission along a direct or a reflected path. Embodiments may therefore reduce impairments due to poor propagation conditions, for example in high frequency communications such as using mm-Waves. Embodiments may enable more efficient communication in a communication system.

The invention is defined by the appended independent claims 1, 8 and 12-14.

In further embodiments the transceiver module may be operable to communicate with the transceiver device according to a cellular wide area radio communication technology or according to a wired interface technology.

In some embodiments the processing module may be operable to calculate, as information related to the path direction, at least one beam direction for a millimeter-wave radio communication based on 3-dimensional environmental data as information related to environmental data and Global Positioning System (GPS) location data as information related to the position of the transceiver device. Embodiments may make use of GPS location data of the transceiver device.

In further embodiments the processing module may be operable to obtain the information related to the path direction based on a ray-tracing algorithm and the environmental data.

Embodiments may enable determination of information related to the path direction using a ray-tracing model based on the environmental data of the communication system.

In some embodiments the information related to the environmental data may comprise information related to reflections, reflection factors, information related to a position of one or more other transceivers and a topology of a coverage area of the communication system. Embodiments may enable accurate prediction of the actual path direction.

In further embodiments the transceiver module may be operable to further receive information related to a radio link quality from the transceiver device. The processing module may be operable to update the environmental data and/or beam direction data based on the information related to the radio link quality. Embodiments may enable an updating mechanism of the environmental database related to the actual radio link quality. For example, after establishment of a radio link beam directions may be further improved using adaptive algorithms. Such beam or beam pattern improvement may lead to improvements in the radio link quality and hence such improved directional information may be used to update the environmental data. For example, shadowing effects may evoke changes in the radio quality of the coverage of the communication network when objects enter, leave, or move in the coverage area. Such changes could be monitored using information on an experienced radio link quality of the transceiver device and such information could be used to update or improve the environmental data.

In some embodiments the processing module may be operable to statistically collect information related to radio communication in the communication system to update the environmental data and/or beam direction data.

In some embodiments, the first transceiver module of the transceiver apparatus may be operable to communicate in accordance with a millimeter-wave radio communication technology.

Additionally or alternatively the location module may comprise a Global Position System (GPS) receiver operable to determine a GPS-location of the apparatus as information related to the position of the apparatus. Embodiments may enable to determine the GPS location or position of the apparatus.

Alternatively the location module may comprise a storage module for storing predetermined information related to the position of the apparatus.

In further embodiments, the second transceiver module of the apparatus may be operable to communicate with the processing device according to a cellular wide area radio communication technology.

In some embodiments, the information related to the position of the apparatus may comprise information related to the height of the directive antenna.

Alternatively or additionally the information related to the path direction may comprise information related to at least one beam direction for the directive antenna.

The embodiments and/or examples disclosed in the following description which are not covered by the dependent claims are considered as not being part of the invention.

### Brief description of the figures

Some other features or aspects will be described using the following non-limiting embodiments of apparatuses or methods or computer programs or computer program products by way of example only, and with reference to the accompanying figures, in which:
Fig. 1 illustrates a block diagram of an embodiment of an apparatus for determining information related to a path direction for a communication system and coupled to an embodiment of an apparatus for a transceiver of the communication system;
Fig. 2 illustrates a block diagram of an embodiment of a communication system with established information transmission of small cells for further processing at an external processing unit;
Fig. 3 illustrates a block diagram of an embodiment of a communication system with established mm-wave-links;
Fig. 4 illustrates a block diagram of a flow chart of an embodiment of a method for a processing device for determining information related to a path direction for a communication system; and
Fig. 5 illustrates a block diagram of a flow chart of an embodiment of a method for a transceiver of a communication system.

### Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following some embodiments of apparatuses, methods and computer programs for determining information related to a path direction for a communication system and for a transceiver of a communication device will be described. Initial beam directions for LOS or NLOS mm-wave connection may be evaluated when a link connection between mm-wave nodes, i.e. nodes in a communication network, e.g. small cells, is established.

A straightforward concept may scan all spatial directions around a transmitter and a receiver location. A channel sounder may be used to investigate mm-wave NLOS channels and finding the correct direction may be difficult. Such difficulty may even be increased due to the fact that high gain antennas may be needed at transmitter and receiver to compensate for high pathloss with reasonable effort. Scanning all spatial directions may lead to relatively long trial and search phases, because for each direction at the transmitter all possible receiver directions may need to be scanned. Also there might not be an automatic protocol, so this method may be suitable for manually controlled channel investigations, but may be considered impossible to use for operation of a flexible and dynamic communication system.

Other concepts may make use of iterative training or beam-searching algorithms. These methods may rely on iteratively testing of several candidate beams which are then gradually refined or narrowed. However, these algorithms suffer from a rather slow convergence time. Such algorithms may have a long convergence time which may often be unacceptable for mobile communications.

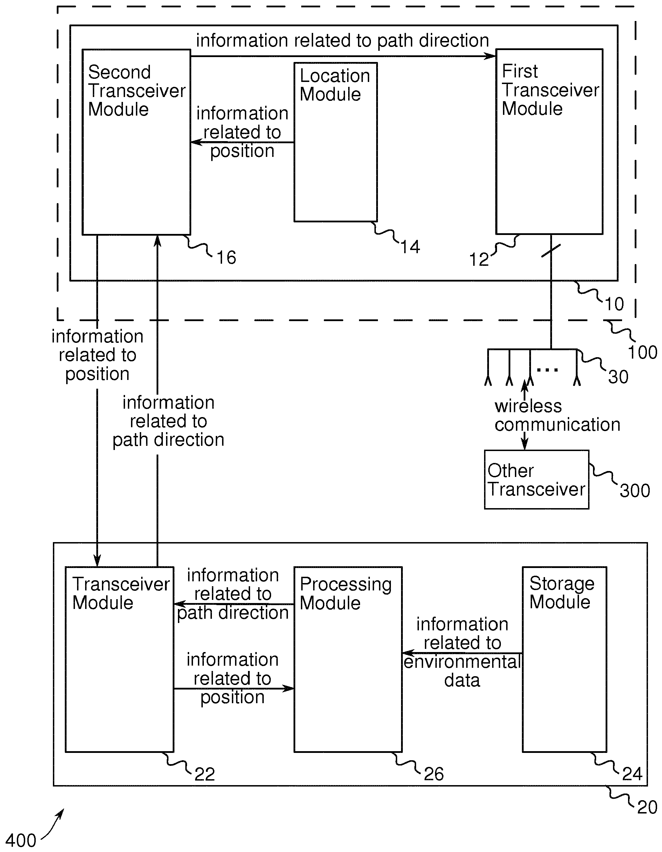

Fig. 1 illustrates a block diagram of an embodiment of a processing apparatus 20 for determining information related to a path direction for a communication system 400. Information related to a path direction may comprise information on a direction of a propagation path, which may be one out of multiple propagation paths, or a direction of a signal path, etc. The processing apparatus 20 may be implemented as one or more processing units, one or more processing devices, any means for processing, a computer, a server, one or more processors, programmable hardware, etc. The processing apparatus 20 comprises a transceiver module 22 operable to obtain information related to a position of a transceiver device 10. It is to be noted that the information related to the position of the transceiver device 20 may comprise information related to the position of one or more antenna elements 30 of the transceiver device 20. In some embodiments, for example for most mobile transceivers, the position of the device 20 and the position of its antenna 30 may be relatively fixed, such that information on the position of the device 20 may allow determining the position of the one or more antenna elements 30 or vice versa. In a similar manner, the transceiver module 22 may be implemented as one or more transceiver devices, one or more transceiver units, any means for transceiving, i.e. receiving and/or transmitting etc.

A transceiver or transceiver module 22 may be any means for transceiving, i.e. receiving and/or transmitting etc., and it may comprise typical receiver and transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc.

Further, the processing apparatus 20 comprises a storage module 24 operable to store information related to environmental data of the communication system 400. The storage module 24 may be any kind of internal or external storage device or database, operable to store information. For example, the storage module 26 may correspond to one or more memory or storage units, devices, any means for storing, such as, for example, a Read Only Memory (ROM), Random Access Memory (RAM), non-volatile storage, flash memory, a hard disk, solid state drive, etc. In addition, the storage module 24 (and also the processing module 26 which will be introduced subsequently) may also be used for additional mm-wave network (i.e. communication system 400) management tasks, e.g. to further optimize mm-wave operation through switching nodes on and off according to traffic requirements or resource management. Further, switching nodes on and off may increase the energy efficiency of the nodes. The storage module 24 may further be augmented or provided with feedback from the network nodes about the optimal beam directions after the termination of a beam refinement algorithm or after determination of stabilized beams for certain constellations of transceivers in the communication network 400.

The processing apparatus 20 further comprises a processing module 26, which is coupled to the transceiver module 22 and to the storage module 24. The processing module 26 is operable to process the information related to the position of the transceiver device 10 based on the stored information related to the environmental data to obtain information related to a path direction. In embodiments the processing module 26 may be implemented using one or more processing units, processing devices, any means for processing, such as a processor, a computer or a programmable hardware component being operable with accordingly adapted software. In other words, the above described functions of the processing module 26 may as well be implemented in software, which is then executed on one or more programmable hardware components. Such hardware components may comprise a general purpose processor, a Digital Signal Processor (DSP), a microcontroller, etc. Further, the transceiver module 22 is operable to provide the information related to the path direction to the transceiver device 10.

It is to be noted that in embodiments path directions and also corresponding beam directions may be used to establish radio communication between two transceivers, e.g. a base station transceiver and a mobile transceiver, two mobile transceivers, two base station transceivers, etc. The environmental data may comprise information on the communication system, which may comprise location, position, and/or orientation information on one or more transceivers of the communication network, e.g. location and orientation of a base station transceiver. The processing module 26 may then, for example, determine a path direction between a mobile transceiver, which provides its location information, and said base station transceiver for which location information is stored in the environmental data.

In some embodiments the transceiver module 22 may be operable to obtain information related to a position of another transceiver 300, which is also indicated in Fig.1. For example, in such an embodiment, the transceiver device 10 and the other transceiver 300 may correspond to two mobile transceivers establishing a direct radio link between each other or also to two base station transceivers establishing a radio backhaul link between each other. The processing module 26 may then be operable to process the information related to the position of the transceiver device 10 and the information related to the position of the other transceiver 300 based on the stored information related to the environmental data to obtain information related to a path direction. Accordingly, the information related to the path direction may then be provided to both the transceiver device 10 and the other transceiver 300.

The processing apparatus 20, also herein referred to as external processing unit 20, may be a unit which is not necessarily part of the communication system 400, also herein referred to as mm-wave network 400. In other words the communication network may correspond to a network with a system carrier frequency of more than 2GHz, e.g. more than 5GHz, 7GHz, 10GHz, 20GHz, 50GHz, 70GHz, 100GHz, 200GHz, 300GHz, 500GHz, etc. The mobile communication system 400 may, for example, reuse protocols of or even correspond to one of the Third Generation Partnership Project (3GPP)-standardized mobile communication networks operable at or standardized for such a carrier frequency, where the term mobile communication system is used synonymously to mobile communication network. The mobile or wireless communication system may correspond to, for example, a 5G network, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In embodiments a transceiver 100 may correspond to a base station transceiver, a mobile station transceiver, a relay station transceiver, a repeater, a small cell base station transceiver, etc.

A base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system 400 comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) -stick, a car, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point etc., which may be further subdivided in a remote unit and a central unit.

A mobile transceiver can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In other words, in embodiments the mobile communication system 400 may correspond to a HetNet, which utilizes different cell types, i.e. Closed Subscriber Group (CSG) cells and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can at least partly be surrounded by the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or gate section at the airport, i.e. its coverage area may have a diameter below 50m. Thus, a base station transceiver may also be referred to as cell.

In some embodiments, the environmental data comprises information related to a 3-dimensional representation of a coverage area of the communication system 400. In other words, the environmental data may comprise 3-dimensional topology data of the coverage area of the communication network 400, which may comprise, base station transceiver locations, obstacles, buildings, cell structures, etc. In embodiments, the processing apparatus 20 may be connected via a backbone connection to the communication system 400. A backbone may be a communication link with a high bandwidth for transmission of large amounts of data. The processing apparatus 20 may receive location information, for example about the GPS location information, of one or more mm-wave nodes in the communication system 400.

In further embodiments the transceiver module 22 may be operable to communicate with the transceiver device 10 according to a cellular wide area radio communication technology or according to a wired interface technology. The communication with the external processing apparatus 20 may for example be done over (existing) secondary communication systems at lower frequencies. A low frequency communication system and/or external data base stations transceivers and mobile transceivers could be operated by the mm-wave system provider or could also be applied as third party service. For example, such a cellular wide area network may correspond to or comply with one of the above listed standards and it may be operable at respective lower frequencies. In other embodiments such communication may be carried out using wired communication, e.g. twisted pair, Ethernet, T1, optical data transmission, etc.

In some embodiments the processing module 26 may be operable to calculate, as information related to the path direction, at least one beam direction for a millimeter-wave radio communication based on 3-Dimensional (3D) environmental data as information related to environmental data and Global Positioning System (GPS) location data as information related to the position of the transceiver device 10. A beam direction may correspond to a direction of a main lobe of an antenna pattern which may be formed at a transceiver using a directive antenna.

As has been mentioned above, embodiments may use beamforming to implement a directive antenna, which is to be understood as signal processing means to achieve defined or controlled superposition of the signals transmitted by the individual transmit/receive antenna elements. For example, a geometry of a plurality of transmit/receive antenna elements may correspond to a linear antenna array, a circular antenna array, , any two-dimensional antenna array or field, or even an arbitrary antenna array, for as long as geometrical relations between the antenna elements are known or controlled. In some embodiments, a plurality of antenna elements or transmit/receive antennas may correspond to a uniform linear antenna array, wherein the transmit/receive antennas are spaced uniformly, and wherein the distance between two antenna elements may correspond to, for example, half of a wavelength of the carrier frequency of the signals transmitted/received using these antennas. As known for beamforming, by providing phase shifted versions of the same signal to different antenna elements, constructive and destructive superposition of the transmitted/received signals may be achieved for different angular directions with respect to these antennas. The more antennas are used, the higher the overall BF gain and the narrower a beam that may be formed. In embodiments a transmit/receive antenna or a transmit/receive antenna element may use an individual beam pattern covering a sector or a cell of the base station transceiver, e.g. a 90° half power beam width antenna pattern to cover a 120° sector or cell.

In further embodiments the processing module 26 may be operable to obtain the information related to the path direction based on a ray-tracing algorithm and the environmental data. Ray tracing may be a reliable method to predict angles of departure and angles of arrival. The external processing apparatus 20 may contain a 3D environmental database, a ray tracing program and may also store the transmitted location data of the network nodes. In some embodiments the environmental data may comprise information related to a 3-D representation of a coverage area of the communication system. Based on this information, the external processing apparatus 20 may calculate beam directions needed to connect mm-wave nodes, e.g. backhaul nodes and small cells, or mm-wave access points and mm-wave UEs.

In some embodiments the information related to the environmental data may comprise information related to reflections, reflection factors, information related to a position of one or more other transceivers 300 and a topology of a coverage area of the communication system 400. With knowledge of reflections, reflection factors, information related to a position of one or more other transceivers 300 and a topology of a coverage area of the communication system 400 a highly accurate beam direction may be provided to the nodes of the communication system 400.

In further embodiments the transceiver module 22 may be operable to further receive information related to a radio link quality from the transceiver device 10. The processing module 26 may be operable to update the environmental data and/or beam direction data based on the information related to the radio link quality. For example, changes in the radio coverage may be determined or detected and corresponding updating measures on the environmental data may be taken, e.g. by means of correction values or update of the entire environmental data. In other words, transceivers operable in the communication network 400 may collect information on their respective radio links within the network 400. In some embodiments, such information may be used to update the environmental data and/or beam direction data and improve the determination of the information related to the path direction.

In some embodiments the processing module 26 may be operable to statistically collect information related to radio communication in the communication system 400 to update the environmental data and/or beam direction data. In other words, the accuracy of the environmental data may be increased based on further statistical information. Likewise, transceivers or transceiver devices 10 may as well be operable to provide statistical information to the above described processing device 20 to allow for statistical improvement of the environmental data.

Fig. 1 further illustrates a block diagram of an embodiment of an apparatus 10 for a transceiver 100 of a communication system 400. In other words, the apparatus 10 may be adapted to or operable in a transceiver 100; may be operated by or comprised in the transceiver 100. Embodiments may also provide a transceiver 100 (dashed lines in Fig. 1) comprising the apparatus 10. The apparatus 10 comprises a first transceiver module 12. The transceiver module 12 may correspond to a similar transceiver module 22 as described above, however, adapted to a base station transceiver 100, mobile transceiver, a relay station transceiver, a repeater, etc., comprising the above described typical transceiver components. In a similar manner, the transceiver module 12 may be implemented as one or more transceiver devices, one or more transceiver units, any means for transceiving, i.e. receiving and/or transmitting, etc.

The first transceiver module 12 is operable to wirelessly communicate with another transceiver 300 of the communication system 400. The first transceiver module 12 is operable to use a directive antenna 30 to communicate with the other transceiver 300. The transceiver 100 may correspond to a base station transceiver, e.g. a small cell transceiver, or a mobile transceiver and hence, the other transceiver 300 may correspond to a respective mobile transceiver or a small cell transceiver or a base station transceiver.

The directive antenna 30 may, for example, be a rectangular planar antenna array which contains 36 antenna elements in a 6 x 6 arrangement. An antenna array with such a large number of antenna elements may be also called a massive Multiple-Input-Multiple-Output (MIMO) antenna array. Alternatively, the rectangular planar antenna array may contain for example 25 antenna elements in a 5 x 5 arrangement, 40 antenna elements in a 8 x 5 arrangement (8 columns and 5 rows), 50 antenna elements in a 5 x 10 arrangement (5 columns and 10 rows) or 64 antenna elements in a 8 x 8 arrangement. Certainly, rectangular planar antenna arrays with further number of antenna elements in further arrangements of columns and rows may be used for the directive antenna, or likewise any of the above-described antenna arrangements for beamforming.

The apparatus 10 further comprises a location module 14. The location module 14 is operable to determine information related to a position of the apparatus 10. The location module 14 may be implemented as one or more location units, one or more location devices, any mean for locating, etc. The location module 14 may determine the information related to the position of the apparatus 10 by receiving time shifted signals, for example, from satellites, using triangulation, or any means for locating. For example, the location module 14 may comprise a receiver of a global or regional navigation satellite system such as GPS, GLobalnaya NAvigatsionnaya Sputnikovaya Sistema (GLONASS, Russian global navigation satellite system), Galileo (global navigation satellite system currently being built by the European Union (EU) and European Space Agency (ESA)), Indian Regional Navigation Satellite System (IRNSS) being developed by the Indian Space Research Organization (ISRO)) or Beidou-2 (a Chinese satellite navigation system).

Further, the apparatus 10 comprises a second transceiver module 16, which is coupled to the first transceiver module 12 and to the location module 14. The second transceiver module 16 may correspond to a similar transceiver module 22 as described above; however, adapted to a base station transceiver or a mobile transceiver 100, comprising the above described typical transceiver components. In a similar manner, the transceiver module 16 may be implemented as one or more transceiver devices, one or more transceiver units, any means for transceiving, i.e. receiving and/or transmitting, etc.

The second transceiver module 16 is operable to communicate with the processing device 20 being different from the other transceiver 300. In other words, the processing device may correspond to an entity which is different from the other transceiver 300. Further, the second transceiver module 16 is operable to provide the information related to the position of the apparatus 10 to the processing device 20.

The second transceiver module 16 is further operable to obtain the information related to the path direction from the processing device 20. For example, the transceivers/nodes may receive the beam direction information, for example using an LTE machine-type communication network according to 3GPP Rel. 11, from the processing device 20.

The first transceiver module 12 is further operable to use the directive antenna 30 based on the information related to the path direction. Based on the received information the transceiver or transceiver node 100 may start setting up a mm-wave connection with already almost accurate beam directions. Further optimization may then take place on the PHYsical (PHY) layer of the mm-wave system. This information may be used to enhance the stored beam directions in the environmental data for a specific connection for future use (location dependent).

In some embodiments the first transceiver module 12 may be operable to communicate in accordance with a millimeter-wave radio communication technology in line with the above description. In some embodiments the first transceiver module 12 may be coupled to at least one antenna element adapted to the millimeter-wave radio communication technology, also in line with the above beamforming description and the corresponding antenna elements and arrangements.

The first transceiver module 12 may be operable to communicate according to a millimeter-wave radio communication technology, wherein the second transceiver module 16 may be operable to communicate according to a cellular wide area radio communication technology or according to a wired interface technology, as has been explained above with respect to the processing unit 20.

Additionally or alternatively the location module 14 may comprise a Global Position System (GPS) receiver, or any other navigation system receiver as mentioned above, which is operable to receive a location data (e.g. GPS-location) of the apparatus 10 as information related to the position of the apparatus 10. The mm-wave network nodes (base stations, small cells, or user terminals) may be equipped with a navigation system/GPS receiver and may collect (GPS) location information (e.g. including height). In some embodiments also the orientation of the node (e.g. direction of boresight of antenna array) may be derived by help of GPS functionality, orientation sensors, or may be entered (coded) manually at installation (for fixed nodes) or with another suitable method.

Alternatively the location module 14 may for example be a receiver of a global or regional navigation satellite system such as GLONASS Galileo, IRNSS or Beidou-2.

In some embodiments the location module 14 may comprise a storage module for storing predetermined information related to the position of the apparatus 10. The storage may for example be an internal or external database operable to store information related to the position of the apparatus 10 and further information, for example on a hard drive.

For communication according to the cellular wide area radio communication technology the second transceiver module 16 may use a further antenna. The further antenna may be an antenna with a single antenna element or also a MIMO/beamforming antenna array with for example 4 antenna elements in a 2 x 2 arrangement.

Additionally or alternatively, the information related to the position of the apparatus 10 may comprise information related to the location of the apparatus 10 and information related to an orientation of the apparatus 10. The location information is transmitted to the external processing unit 20. The mm-wave link may not be established yet or may be disrupted and the transmission of the location information is done, for example, with an existing LTE Machine-type communication network as e.g. according to 3GPP Rel. 11.

In some embodiments the information related to the position of the apparatus 10 may comprise information related to the height of the directive antenna 30. Additionally or alternatively, the information related to the path direction comprises information related to at least one beam direction for the directive antenna 30.

In some embodiments mobile transceivers may download a map from the external data base 20 which contains the optimal beam directions for every given position in a certain area. Thus, the communication cycle or the frequency of communication with the external server 20 could be reduced. In such an embodiment the information related to the position of the transceiver device 10 (e.g. the mobile transceiver) may correspond to information related to the area the mobile transceiver 10 is located in. The information related to the path direction as provided in return from the processing apparatus 20 may then be comprised in map data, i.e. in a collection of data indicating path directions for multiple positions.

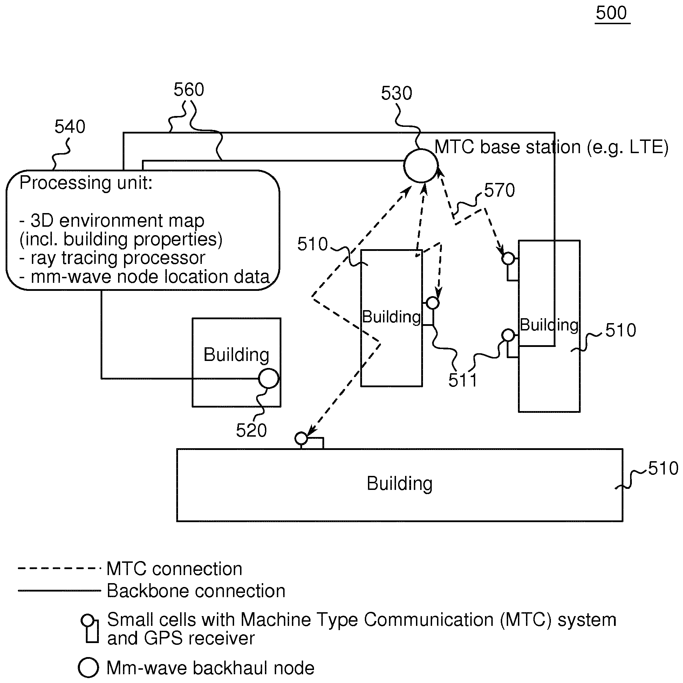

Fig. 2 illustrates a block diagram of an embodiment of a communication system 500, which may correspond to the above communication system 400, with established information transmission of small cells 511, which may comprise the above transceiver apparatus 10, for further processing at an external processing unit 540, which comprises an embodiment of the above processing apparatus 20. Fig. 2 depicts a small cell backhaul system showing some buildings 510 with some small cells 511 distributed within the area. After powering up, the small cells 511 receive GPS signals and orientation information. Alternatively the location/orientation information may be entered manually if not equipped with GPS or orientation sensors and stored in a corresponding storage module. The small cells 511 comprise embodiments of the above described transceiver apparatuses 10. In the present embodiment the small cells 511 use a machine-type communication system 570 or another low-frequency system to transmit the location and orientation information to a machine-type communication (MTC) or low-frequency node 530. This node 530 is connected via a backbone 560 to the external processing unit 540.

Alternatively, if appropriate interfaces are available near the small cell nodes 511, they can also be connected directly to the backbone 560 and the external processing unit 540. This is indicated for the mm-wave backhaul node 520 and one of the small cells 511 in Fig. 2.

The external processing unit 540 contains a 3D map of the environment, a ray tracing processor implemented in the processing module 26, and the transmitted location information of the mm-wave nodes 511. The node location and orientation information may for example be stored also for further processing in e.g. a data base.

The external processing unit 540 performs ray tracing simulations for the links between mm-wave backhaul node 520 and small cells 511. The direction of the strongest path represents the direction of the beam to be selected for backhaul connection. This directional information is then transmitted to the small cells 511 and to the backhaul node 520 via backbone 560 and MTC 570, via backbone 560 only, or via a low-frequency range communication system.

Alternatively, if multiple strong paths are present, also multi-beam antenna pattern may be selected and appropriate beamforming weights may be applied. That is to say that in some embodiments the information related to the path direction may comprise information related to multiple paths between two transceivers, such that an according beam pattern may be adapted to the multiple paths. The processing module 16 may then determine multiple path directions or corresponding beamforming weights. In other embodiments beam pattern optimization may be carried out at a transceiver based on an initial beam pattern or path direction, for which weights may be provided as part of the information related to the path direction. Optimized beam weights or path information may then be used as part of the environmental data for improved future use.

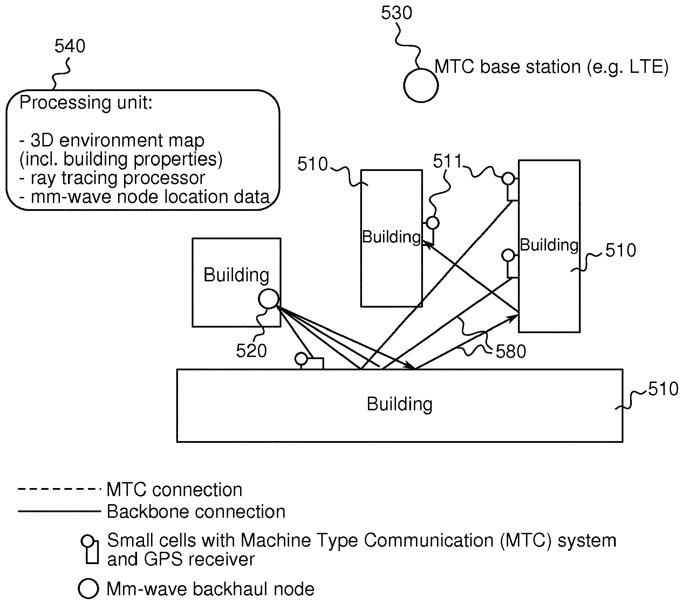

Fig. 3 illustrates a block diagram of an embodiment of a communication system with established mm-wave-link 580. With the directional information received from the backhaul node 520 via backbone 560 and MTC 570, via backbone 560 only, or via a low-frequency range communication system (Fig. 2), the small cells 511 and backhaul nodes 520 steer their beams 580 in the right direction to establish the mm-wave link. The beams 580 may be reflected e.g. at a building 510. The reflections of the beam at buildings 510 have already been considered at the calculation of the beam directions at the processing unit 540.

The apparatuses and methods described above provide a basic method for a realizable solution of fast mm-wave link establishment and beam tracking for flexible small cell backhaul or even access using mm-waves in scenarios with direct or reflected paths and high gain narrow beam antennas. It allows a dynamic mm-wave network management and optimization with high accuracy offline processing taking into account all network nodes.

The apparatuses and methods described above may be faster than pure trial and error algorithms. They may provide flexibility for re-adjustment during operation of the system. Further, a network optimization and management of the mm-wave network over the same communication mechanism may be applicable. However, mm-wave operators may be free to either set up the offline processing for themselves or to offer it as a specifically tailored service also to other operators, or a third party may set up this service and offer it to operators.

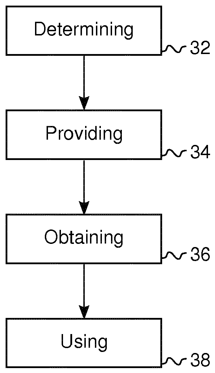

Fig. 4 illustrates a block diagram of a flow chart of an embodiment of a method for a transceiver 100 of a communication system 400. The method comprises determining 32 information related to a position of a transceiver 100. The method further comprises providing 34 the information related to the position of the transceiver 100 to a processing device 20. Further, the method comprises obtaining 36 information related to a path direction from the processing device 20. The method further comprises using 38 a directive antenna 30 to wirelessly communicate with another transceiver 300 being different from the processing device 20 based on the information related to the path direction.

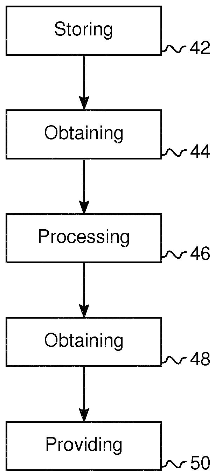

Fig. 5 illustrates a block diagram of a flow chart of an embodiment of a method for a processing device 20 for determining information related to a path direction for a communication system 400. The method comprises storing 42 information related to environmental data of the communication system 400. The method further comprises obtaining 44 information related to a position of a transceiver device 10. Further, the method comprises processing 46 the information related to the position of the transceiver device 10 based on the stored information related to the environmental data. The method further comprises obtaining 48 information related to a path direction. Further, the method comprises providing 50 the information related to the path direction to the transceiver device 10.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for transceiving", "means for storing", "means for processing", "means for locating", etc., may be provided through the use of dedicated hardware, such as "a transceiver", "a processor", "a locator", "a memory/storage", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

## Claims

1. A processing apparatus (20) for determining information related to a propagation path direction, corresponding to at least one beam direction, for a communication system (400), comprising
a transceiver module (22) operable to obtain information related to a position of a transceiver device (10);
a storage module (24) operable to store information related to environmental data of the communication system (400); and
a processing module (26) operable to process the information related to the position of the transceiver device (10) based on the stored information related to the environmental data to obtain information related to a propagation path direction between the transceiver device (10) and another transceiver (300),
wherein the transceiver module (22) is operable to provide the information related to the propagation path direction to the transceiver device (10):
wherein the transceiver module (22) is operable to obtain information related to a position of the other transceiver (300), and wherein the processing module (26) is operable to process the information related to the position of the transceiver device (10) and the information related to the position of the other transceiver (300) based on the stored information related to the environmental data to obtain information related to the propagation path direction; and
wherein the transceiver module (22) is operable to provide the information related to the propagation path direction to both the transceiver device (10) and the other transceiver (300).

2. The apparatus (20) of claim 1, wherein the transceiver module (22) is operable to communicate with the transceiver device (10) according to a cellular wide area radio communication technology or according to a wired interface technology.

3. The apparatus (20) of claim 1, wherein the processing module (26) is operable to calculate, as information related to the propagation path direction, at least one beam direction for a millimeter-wave radio communication based on 3-dimensional environmental data as information related to environmental data and Global Positioning System (GPS) location data as information related to the position of the transceiver device (10).

4. The apparatus (20) of claim 1, wherein the environmental data comprises information related to a 3-dimensional representation of a coverage area of the communication system (400), and/or wherein the processing module (26) is operable to obtain the information related to the propagation path direction based on a ray-tracing algorithm and the environmental data.

5. The apparatus (20) of claim 1, wherein the information related to the environmental data comprises information related to reflections, reflection factors, information related to a position of one or more other transceivers (300), and a topology of a coverage area of the communication system (400).

6. The apparatus (20) of claim 1, wherein the transceiver module (22) is operable to further receive information related to a radio link quality from the transceiver device (10), and wherein processing module (26) is operable to update the environmental data and/or beam direction data based on the information related to the radio link quality.

7. The apparatus (20) of claim 1, wherein the processing module (26) is operable to statistically collect information related to radio communication in the communication system (400) to update the environmental data and/or beam direction data.

8. An apparatus (10) for a transceiver (100) of a communication system (400), comprising:
a first transceiver module (12) operable to wirelessly communicate with another transceiver (300) of the communication system (400), the first transceiver module (12) being operable to use a directive antenna (30) to communicate with the other transceiver (300);
a location module (14) operable to determine information related to a position of the apparatus (10); and
a second transceiver module (16) operable to:
communicate with a processing device (20) being different from the other transceiver (300),
provide the information related to the position of the apparatus (10) to the processing device (20),
obtain information related to a propagation path direction, corresponding to at least one beam direction for the communication system, between the transceiver (100) and the other transceiver (300) from the processing device (20) based on the information related to the position of the apparatus (10) and on the information related to the position of the other transceiver (300), whereas the information related to the propagation path direction is provided to both the transceiver device (10) and the other transceiver (300);
wherein the first transceiver module (12) is further operable to use the directive antenna (30) based on the information related to the propagation path direction.

9. The apparatus (10) of claim 8, wherein the first transceiver module (12) is operable communicate in accordance with a millimeter-wave radio communication technology and wherein the first transceiver module (12) is coupled to at least one antenna element adapted to the millimeter-wave radio communication technology, and/or wherein the location module (14) comprises a Global Position System (GPS) receiver operable to determine a GPS-location of the apparatus (10) as information related to the position of the apparatus (10), or wherein the location module (14) comprises a storage module for storing predetermined information related to the position of the apparatus (10).

10. The apparatus (10) of claim 8, wherein the second transceiver module (16) is operable to communicate with the processing device (20) according to a cellular wide area radio communication technology or according to a wired interface technology, and/or wherein the information related to the position of the apparatus (10) comprises information related to the location of the apparatus (10) and information related to an orientation of the apparatus (10).

11. The apparatus (10) of claim 8, wherein the information related to the position of the apparatus (10) comprises information related to the height of the directive antenna (30), and/or wherein the information related to the propagation path direction comprises information related to at least one beam direction for the directive antenna (30).

12. A method for a processing device (20) for determining information related to a propagation path direction, corresponding to at least one beam direction, for a communication system (400), comprising
storing (42) information related to environmental data of the communication system (400);
obtaining (44) information related to a position of a transceiver device (10) and to a position of another transceiver (300);
and
processing (46) the information related to the position of the transceiver device (10) and the information related to the position of the other transceiver (300) based on the stored information related to the environmental data;
obtaining (48) information related to a propagation path direction between the transceiver device (10) and the other transceiver (300);
providing (50) the information related to the propagation path direction to both the transceiver device (10) and the other transceiver (300).

13. A method for a transceiver (100) of a communication system (400), comprising
determining (32) information related to a position of the transceiver (100) and to a position of another transceiver (300);
providing (34) the information related to the position of the transceiver (100) and to a position of another transceiver (300) to a processing device (20);
obtaining (36) information related to a propagation path direction, corresponding to at least one beam direction for the communication system, from the processing device (20);
providing the information related to the propaagation path direction between the transceiver (100) and the other transceiver (300) to both the transceiver device (10) and the other transceiver (300);
and
using (38) a directive antenna (30) to wirelessly communicate with another transceiver (300) being different from the processing device (20) based on the information related to the propagation path direction.

14. A computer program having a program code for performing at least one of the methods of claims 12 or 13, when the computer program is executed on a computer, a processor, or a programmable hardware component.

## Patentansprüche

1. Verarbeitungsvorrichtung (20) zum Ermitteln von Informationen, die eine Ausbreitungswegrichtung betreffen, die mindestens einer Strahlrichtung entspricht, für ein Kommunikationssystem (400), umfassend
ein Transceivermodul (22), das betriebsfähig ist, um Informationen zu erhalten, die eine Position einer Transceiveranordnung (10) betreffen;
ein Speichermodul (24), das betriebsfähig ist, um Informationen zu speichern, die Umgebungsdaten des Kommunikationssystems (400) betreffen; und
ein Verarbeitungsmodul (26), das betriebsfähig ist, um die Informationen, die die Position der Transceiveranordnung (10) betreffen, auf der Grundlage der die Umgebungsdaten betreffenden gespeicherten Informationen zu verarbeiten, um Informationen zu erhalten, die eine Ausbreitungswegrichtung zwischen der Transceiveranordnung (10) und einem anderen Transceiver (300) betreffen,
wobei das Transceivermodul (22) betriebsfähig ist, um die Informationen bereitzustellen, die die Ausbreitungswegrichtung zur Transceiveranordnung (10) betreffen;
wobei das Transceivermodul (22) betriebsfähig ist, um Informationen zu erhalten, die eine Position des anderen Transceivers (300) betreffen, und wobei das Verarbeitungsmodul (26) betriebsfähig ist, um auf der Grundlage der die Umgebungsdaten betreffenden gespeicherten Informationen die Informationen, die die Position der Transceiveranordnung (10) betreffen, und die Informationen zu verarbeiten, die die Position des anderen Transceivers (300) betreffen, um Informationen zu erhalten, die die Ausbreitungswegrichtung betreffen; und
wobei das Transceivermodul (22) betriebsfähig ist, um die Informationen, die die Ausbreitungswegrichtung betreffen, sowohl der Transceiveranordnung (10) als auch dem anderen Transceiver (300) bereitzustellen.

2. Vorrichtung (20) nach Anspruch 1, wobei das Transceivermodul (22) betriebsfähig ist, um mit der Transceiveranordnung (10) gemäß einer Mobilfunk-Weitbereichskommunikationstechnologie oder gemäß einer leitungsgebundenen Schnittstellentechnologie zu kommunizieren.

3. Vorrichtung (20) nach Anspruch 1, wobei das Verarbeitungsmodul (26) betriebsfähig ist, um auf der Grundlage von dreidimensionalen Umgebungsdaten als Informationen, die Umgebungsdaten betreffen, und von GPS-Standortdaten (GPS = Global Positioning System, Globales Positionsbestimmungssystem) als Informationen, die die Position der Transceiveranordnung (10) betreffen, mindestens eine Strahlrichtung für eine Millimeterwellen-Funkkommunikation als Informationen zu berechnen, die die Ausbreitungswegrichtung betreffen.

4. Vorrichtung (20) nach Anspruch 1, wobei die Umgebungsdaten Informationen umfassen, die eine dreidimensionale Darstellung eines Versorgungsbereichs des Kommunikationssystems (400) betreffen, und/oder wobei das Verarbeitungsmodul (26) betriebsfähig ist, um die Informationen, die die Ausbreitungswegrichtung betreffen, auf der Grundlage eines Strahlenverfolgungsalgorithmus und der Umgebungsdaten zu erhalten.

5. Vorrichtung (20) nach Anspruch 1, wobei die Informationen, die die Umgebungsdaten betreffen, Informationen umfassen, die Reflexionen, Reflexionsfaktoren, eine Position des einen oder der mehreren anderen Transceiver (300) betreffende Informationen und eine Topologie eines Versorgungsbereichs des Kommunikationssystems (400) betreffen.

6. Vorrichtung (20) nach Anspruch 1, wobei das Transceivermodul (22) betriebsfähig ist, um ferner Informationen zu empfangen, die eine Funkverbindungsqualität von der Transceiveranordnung (10) betreffen, und wobei das Verarbeitungsmodul (26) betriebsfähig ist, um die Umgebungsdaten und/oder die Strahlrichtungsdaten auf der Grundlage der Informationen zu aktualisieren, die die Funkverbindungsqualität betreffen.

7. Vorrichtung (20) nach Anspruch 1, wobei das Verarbeitungsmodul (26) betriebsfähig ist, um Informationen statistisch zu erfassen, die die Funkkommunikation im Kommunikationssystem (400) betreffen, um die Umgebungsdaten und/oder Strahlrichtungsdaten zu aktualisieren.

8. Vorrichtung (10) für einen Transceiver (100) eines Kommunikationssystems (400), umfassend:
ein erstes Transceivermodul (12), das betriebsfähig ist, um mit einem anderen Transceiver (300) des Kommunikationssystems (400) über Funk zu kommunizieren, wobei das erste Transceivermodul (12) betriebsfähig ist, um zur Kommunikation mit dem anderen Transceiver (300) eine Richtantenne (30) zu verwenden;
ein Standortbestimmungsmodul (14), das betriebsfähig ist, um Informationen zu ermitteln, die eine Position der Vorrichtung (10) betreffen; und
ein zweites Transceivermodul (16), das betriebsfähig ist, um:
mit einer Verarbeitungsanordnung (20) zu kommunizieren, die sich vom anderen Transceiver (300) unterscheidet,
die die Position der Vorrichtung (10) betreffenden Informationen der Verarbeitungsanordnung (20) bereitzustellen, Informationen, die eine Ausbreitungswegrichtung betreffen, die mindestens einer Strahlrichtung des Kommunikationssystems zwischen dem Transceiver (100) und dem anderen Transceiver (300) entspricht, von der Verarbeitungsanordnung (20) auf der Grundlage der Informationen, die die Position der Vorrichtung (10) betreffen, und der Informationen zu erhalten, die die Position des anderen Transceivers (300) betreffen, wohingegen die Informationen, die die Ausbreitungswegrichtung betreffen, sowohl der Transceiveranordnung (10) als auch dem anderen Transceiver (300) bereitgestellt werden;
wobei das erste Transceivermodul (12) ferner betriebsfähig ist, um die Richtantenne (30) auf der Grundlage der Informationen zu verwenden, die die Ausbreitungswegrichtung betreffen.

9. Vorrichtung (10) nach Anspruch 8, wobei das erste Transceivermodul (12) betriebsfähig ist, um gemäß einer Millimeterwellen-Funkkommunikationstechnologie zu kommunizieren, und wobei das erste Transceivermodul (12) mit mindestens einem Antennenelement verbunden ist, das an die Millimeterwellen-Funkkommunikationstechnologie angepasst ist, und/oder wobei das Standortbestimmungsmodul (14) einen Global-Position-System-Empfänger (GPS-Empfänger) umfasst, der betriebsfähig ist, um einen GPS-Standort der Vorrichtung (10) als Informationen zu ermitteln, die die Position der Vorrichtung (10) betreffen, oder wobei das Standortbestimmungsmodul (14) ein Speichermodul zum Speichern vorgegebener Informationen umfasst, die die Position der Vorrichtung (10) betreffen.

10. Vorrichtung (10) nach Anspruch 8, wobei das zweite Transceivermodul (16) betriebsfähig ist, um mit der Verarbeitungsanordnung (20) gemäß einer Mobilfunk-Weitbereichskommunikationstechnologie oder gemäß einer leitungsgebundenen Schnittstellentechnologie zu kommunizieren, und/oder wobei die Informationen, die die Position der Vorrichtung (10) betreffen, Informationen umfassen, die den Standort der Vorrichtung (10) betreffen, und Informationen, die eine Ausrichtung der Vorrichtung (10) betreffen.

11. Vorrichtung (10) nach Anspruch 8, wobei die Informationen, die die Position der Vorrichtung (10) betreffen, Informationen umfassen, die die Höhe der Richtantenne (30) betreffen, und/oder wobei die Informationen, die die Ausbreitungswegrichtung betreffen, Informationen umfassen, die mindestens eine Strahlrichtung der Richtantenne (30) betreffen.

12. Verfahren für eine Verarbeitungsanordnung (20) zum Ermitteln von Informationen, die eine Ausbreitungswegrichtung betreffen, die mindestens einer Strahlrichtung entspricht, für ein Kommunikationssystem (400), umfassend Speichern (42) von Informationen, die Umgebungsdaten des Kommunikationssystems (400) betreffen;
Erhalten (44) von Informationen, die eine Position einer Transceiveranordnung (10) und eine Position eines anderen Transceivers (300) betreffen;
und
Verarbeiten (46) der Informationen, die die Position der Transceiveranordnung (10) betreffen, und der Informationen, die die Position des anderen Transceivers (300) betreffen, auf der Grundlage der gespeicherten Informationen, die die Umgebungsdaten betreffen;
Erhalten (48) von Informationen, die eine Ausbreitungswegrichtung zwischen der Transceiveranordnung (10) und dem anderen Transceiver (300) betreffen;
Bereitstellen (50) der Informationen, die die Ausbreitungswegrichtung betreffen, sowohl für die Transceiveranordnung (10) als auch für den anderen Transceiver (300).

13. Verfahren für einen Transceiver (100) eines Kommunikationssystems (400), umfassend
Ermitteln (32) von Informationen, die eine Position des Transceivers (100) und eine Position eines anderen Transceivers (300) betreffen; Bereitstellen (34) der Informationen, die die Position des Transceivers (100) und eine Position eines anderen Transceivers (300) betreffen, für eine Verarbeitungsanordnung (20);
Erhalten (36) von Informationen, die eine Ausbreitungswegrichtung betreffen, die mindestens einer Strahlrichtung des Kommunikationssystems entspricht, von der Verarbeitungsanordnung (20); Bereitstellen der Informationen, die die Ausbreitungswegrichtung zwischen dem Transceiver (100) und dem anderen Transceiver (300) betreffen, für sowohl die Transceiveranordnung (10) als auch für den anderen Transceiver (300);
und
Verwenden (38) einer Richtantenne (30) zur Funkkommunikation mit einem anderen Transceiver (300), der sich von der Verarbeitungsanordnung (20) unterscheidet, auf der Grundlage der Informationen, die die Ausbreitungswegrichtung betreffen.

14. Computerprogrammprodukt, das einen Programmcode zum Durchführen mindestens eines der Verfahren der Ansprüche 12 oder 13 aufweist, wenn das Computerprogramm auf einem Computer, einem Prozessor oder einer programmierbaren Hardwarekomponente ausgeführt wird.

## Revendications

1. Appareil de traitement (20) pour déterminer des informations se rapportant à une direction de trajet de propagation, correspondant à au moins une direction de faisceau, pour un système de communication (400), comprenant
un module émetteur-récepteur (22) permettant d'obtenir des informations se rapportant à une position d'un dispositif émetteur-récepteur (10) ; un module de stockage (24) permettant de stocker des informations se rapportant à des données environnementales du système de communication (400) ; et
un module de traitement (26) permettant de traiter les informations se rapportant à la position du dispositif émetteur-récepteur (10) en se basant sur les informations stockées se rapportant aux données environnementales pour obtenir des informations se rapportant à une direction de trajet de propagation entre le dispositif émetteur-récepteur (10) et un autre émetteur-récepteur (300),
dans lequel le module émetteur-récepteur (22) permet de fournir les informations se rapportant à la direction de trajet de propagation au dispositif émetteur-récepteur (10) ;
dans lequel le module émetteur-récepteur (22) permet d'obtenir des informations se rapportant à une position de l'autre émetteur-récepteur (300) et dans lequel le module de traitement (26) permet de traiter les informations se rapportant à la position du dispositif émetteur-récepteur (10) et les informations se rapportant à la position de l'autre émetteur-récepteur (300) en se basant sur les informations stockées se rapportant aux données environnementales pour obtenir des informations se rapportant à la direction de trajet de propagation ; et
dans lequel le module émetteur-récepteur (22) permet de fournir les informations se rapportant à la direction de trajet de propagation à la fois au dispositif émetteur-récepteur (10) et à l'autre émetteur-récepteur (300).

2. Appareil (20) selon la revendication 1, dans lequel le module émetteur-récepteur (22) permet de communiquer avec le dispositif émetteur-récepteur (10) en fonction d'une technologie de radiocommunication de zone étendue cellulaire ou en fonction d'une technologie d'interface câblée.

3. Appareil (20) selon la revendication 1, dans lequel le module de traitement (26) permet de calculer, en tant qu'informations se rapportant à la direction de trajet de propagation, au moins une direction de faisceau pour une radiocommunication à ondes millimétriques en se basant sur des données environnementales tridimensionnelles en tant qu'informations se rapportant à des données environnementales et sur des données de localisation de système mondial de positionnement (GPS) en tant qu'informations se rapportant à la position du dispositif émetteur-récepteur (10).

4. Appareil (20) selon la revendication 1, dans lequel les données environnementales comportent des informations se rapportant à une représentation tridimensionnelle d'une zone de couverture du système de communication (400) et/ou dans lequel le module de traitement (26) permet d'obtenir les informations se rapportant à la direction de trajet de propagation en se basant sur un algorithme du lancer de rayons et les données environnementales.

5. Appareil (20) selon la revendication 1, dans lequel les informations se rapportant aux données environnementales comportent des informations se rapportant à des réflexions, à des facteurs de réflexion, des information se rapportant à une position d'un ou de plusieurs autres émetteurs-récepteurs (300) et à une topologie d'une zone de couverture du système de communication (400).

6. Appareil (20) selon la revendication 1, dans lequel le module émetteur-récepteur (22) permet de recevoir en outre des informations se rapportant à une qualité de liaison radio en provenance du dispositif émetteur-récepteur (10) et dans lequel le module de traitement (26) permet de mettre à jour les données environnementales et/ou les données de direction de faisceau en se basant sur les informations se rapportant à la qualité de liaison radio.

7. Appareil (20) selon la revendication 1, dans lequel le module de traitement (26) permet de collecter statistiquement des informations se rapportant à une radiocommunication dans le système de communication (400) pour mettre à jour les données environnementales et/ou les données de direction de faisceau.

8. Appareil (10) pour un émetteur-récepteur (100) d'un système de communication (400), comprenant :
un premier module émetteur-récepteur (12) permettant de communiquer sans fil avec un autre émetteur-récepteur (300) du système de communication (400), le premier module émetteur-récepteur (12) permettant d'utiliser une antenne directive (30) pour communiquer avec l'autre émetteur-récepteur (300) ;
un module de localisation (14) permettant de déterminer des informations se rapportant à une position de l'appareil (10) ; et
un second module émetteur-récepteur (16) permettant :
de communiquer avec un dispositif de traitement (20) qui est différent de l'autre émetteur-récepteur (300),
de fournir les informations se rapportant à la position de l'appareil (10) au dispositif de traitement (20),
d'obtenir des informations se rapportant à une direction de trajet de propagation, correspondant à au moins une direction de faisceau pour le système de communication, entre l'émetteur-récepteur (100) et l'autre émetteur-récepteur (300) à partir du dispositif de traitement (20) en se basant sur les informations se rapportant à la position de l'appareil (10) et sur les informations se rapportant à la position de l'autre émetteur-récepteur (300) tandis que les informations se rapportant la direction de trajet de propagation sont fournies à la fois au dispositif émetteur-récepteur (10) et à l'autre émetteur-récepteur (300) ;
dans lequel le premier module émetteur-récepteur (12) permet en outre d'utiliser l'antenne directive (30) en se basant sur les informations se rapportant à la direction de trajet de propagation.

9. Appareil (10) selon la revendication 8, dans lequel le premier module émetteur-récepteur (12) permet de communiquer en fonction d'une technologie de radiocommunication à ondes millimétriques et dans lequel le premier module émetteur-récepteur (12) est couplé à au moins un élément d'antenne conçu pour la technologie de radiocommunication à ondes millimétriques et/ou dans lequel le module de localisation (14) comprend un récepteur de système mondial de positionnement (GPS) permettant de déterminer une position GPS de l'appareil (10) en tant qu'informations se rapportant à la position de l'appareil (10) ou dans lequel le module de localisation (14) comprend un module de stockage pour stocker des informations prédéterminées se rapportant à la position de l'appareil (10).

10. Appareil (10) selon la revendication 8, dans lequel le second module émetteur-récepteur (16) permet de communiquer avec le module de traitement (20) en fonction d'une technologie de radiocommunication de zone étendue cellulaire ou en fonction d'une technologie d'interface câblée et/ou dans lequel les informations se rapportant à la position de l'appareil (10) comportent des informations se rapportant à la localisation de l'appareil (10) et des informations se rapportant à une orientation de l'appareil (10) .

11. Appareil (10) selon la revendication 8, dans lequel les informations se rapportant à la position de l'appareil (10) comportent des informations se rapportant à la hauteur de l'antenne directive (30) et/ou dans lequel les informations se rapportant à la direction de trajet de propagation comportent des informations se rapportant à au moins une direction de faisceau pour l'antenne directive (30).

12. Procédé pour un dispositif de traitement (20) pour déterminer des informations se rapportant à une direction de trajet de propagation, correspondant à au moins une direction de faisceau, pour un système de communication (400), comprenant
le stockage (42) d'informations se rapportant à des données environnementales du système de communication (400) ;
l'obtention (44) d'informations se rapportant à une position d'un dispositif émetteur-récepteur (10) et à une position d'un autre émetteur-récepteur (300) ; et
le traitement (46) des informations se rapportant à la position du dispositif émetteur-récepteur (10) et des informations se rapportant à la position de l'autre émetteur-récepteur (300) en se basant sur les informations stockées se rapportant aux données environnementales ;
l'obtention (48) d'informations se rapportant à une direction de trajet de propagation entre le dispositif émetteur-récepteur (10) et un autre émetteur-récepteur (300) ;
la fourniture (50) des informations se rapportant à la direction de trajet de propagation à la fois au dispositif émetteur-récepteur (10) et à l'autre émetteur-récepteur (300).

13. Procédé pour un émetteur-récepteur (100) d'un système de communication (400), comprenant
la détermination (32) d'informations se rapportant à une position de l'émetteur-récepteur (100) et à une position d'un autre émetteur-récepteur (300) ; la fourniture (34) des informations se rapportant à la position de l'émetteur-récepteur (100) et à une position d'un autre émetteur-récepteur (300) à un dispositif de traitement (20) ;
l'obtention (36) d'informations se rapportant à une direction de trajet de propagation, correspondant à au moins une direction de faisceau pour le système de communication, à partir du dispositif de traitement (20) ;
la fourniture des informations se rapportant à la direction de trajet de propagation entre l'émetteur-récepteur (100) et l'autre émetteur-récepteur (300) à la fois au dispositif émetteur-récepteur (10) et à l'autre émetteur-récepteur (300) ;
et
l'utilisation (38) d'une antenne directive (30) pour communiquer sans fil avec un autre émetteur-récepteur (300) qui est différent du dispositif de traitement (20) en se basant sur les informations se rapportant à la direction de trajet de propagation.

14. Programme d'ordinateur ayant un code de programme pour réaliser au moins l'un des procédés selon les revendications 12 ou 13, lorsque le programme d'ordinateur est exécuté sur un ordinateur, un processeur ou un composant matériel programmable.
